# EUROPEAN PATENT APPLICATION

(11) **EP 1 043 082 A2**
(43) Date of publication of application: **11.10.2000**
(21) Application number: 00201057.7
(22) Date of filing: 22.03.2000
(51) Int. Cl.: B09C 1/06, B09C 1/02

(54) **Method for soil decontamination**

(30) Priority: 30.03.1999 GB 9907168; 22.02.2000 GB 0003990
(71) Applicant: Interpole Limited, Road Town, Tortola (VG)
(72) Inventor: Modica, Giovanni, 20100 Milano (IT)
(74) Representative: Fiammenghi-Domenighetti, Delfina

(57) **Abstract**

A method is described for soils decontamination by removing halogenated hydrocarbons, light and heavy hydrocarbons and organic and inorganic compounds of lead and of other heavy metals, which comprises the following stages:
- treating all of the soil with heat in order to decompose all of the organometallic and inorganic compounds of lead and other heavy metals into hydrocarbons and oxides,
- converting the oxides and other inorganic compounds into new compounds which are readily soluble in leaching solutions,
- converting the halogenated hydrocarbons, light and heavy hydrocarbons into gaseous form and passing them through a heat-resistant porous material,
- destroying the hydrocarbons and halogenated hydrocarbons present in the gaseous phase by means of catalytic oxidation,
- mixing the heat-treated soil with an aqueous solution of substances able to dissolve metal oxides and other toxic inorganic substances,
- separating the soil from the leaching solution,
- washing the soil with water,
- recycling the leaching solution.

## Description

Soils contaminated with halogenated hydrocarbons, light and heavy hydrocarbons and/or lead or with other heavy metals are present in many areas. The methods used for decontaminating these soils are very expensive and are not always effective. This pollution generally comes from liquid or solid waste discharged from chemical industries. Another considerable source of pollution is the storage of spent batteries directly on soil.

When soils contain many compounds, such as halogenated hydrocarbons and light and heavy hydrocarbons, organometallic compounds such as tetraethyllead (TEL), tetramethyllead (TML) and/or inorganic compounds such as lead dioxide or lead sulphate, decontamination is very difficult and the cleaning methods used are often ineffective.

Organometallic lead compounds are highly toxic to living beings and react slowly with water and with bases. Aqueous solutions of strong acids and of strong oxidizing compounds decompose TEL and TML, giving rise to light hydrocarbons and lead dioxide.

This compound is very stable and does not react with water or with dilute solutions of acids or bases; it is only dissolved by concentrated strong acids and bases at high temperature.

Halogenated hydrocarbons and heavy hydrocarbons are sparingly or only slightly soluble in polar media and do not react, at room temperature, with water or with acidic or basic solutions.

However, organometallic compounds of heavy metals decompose at relatively high temperatures (150-300°C). The resulting products depend on the reaction conditions; when TEL and TML are heated in the presence of steam, lead monoxide and methane, ethane and butane are obtained. In addition, if the oxygen pressure of the lead dioxide at 390°C is 1 atm, at higher temperatues this dioxide is converted into lead monoxide and oxygen gas. Lead monoxide is soluble in many aqueous solutions of acids, bases and salts.

Halogenated hydrocarbons and heavy hydrocarbons are undoubtedly in gaseous form when they are heated to high temperatures and it is possible to destroy them by catalytic oxidation.

Treatment with strong acids or with strong oxidizing substances is the method normally used for extensive areas decontamination from organometallic compounds and/or inorganic compounds of lead, mercury, tin, arsenic or antimony.

When treatment of the organometallic compounds is carried out with strong acids, the calcium carbonate present in the soil also reacts readily, with large consumption of acids.

The organic substances present in the soil result in a large consumption of oxidizing agents when the organometallic compounds are treated with these substances.

These treatments are effective in the reaction for destroying the organometallic compounds, but the lead dioxide and the other metal oxides which are only sparingly soluble in water and in solutions of acids or bases remain in the soil.

Treatment with steam is used to reduce the hydrocarbon contamination of soil, but it is ineffective when heavy hydrocarbons are present.

The new method, which is the subject of this patent application, relates to the removal from soil not only of organometallic, organic and inorganic compounds of lead, mercury, tin and antimony, but also of halogenated and light and heavy hydrocarbons, without the drawbacks mentioned above.

This method, which constitutes the subject of the present invention, is described in the preamble of the attached Claim 1 and is the characterizing part of that same claim.

The method of the invention is essentially based on the total heat treatment of the soil in order to decompose organometallic and organic compounds of lead and of other heavy metals into hydrocarbons and oxides, and on the conversion of these oxides and other inorganic compounds into new compounds which are readily soluble in many solvents , and on the evaporation of halogenated hydrocarbons and other hydrocarbons. The halogenated hydrocarbons and the other hydrocarbons, in gaseous form, are destroyed by catalytic oxidation without generating dioxins or other toxic compounds.

After the heat treatment, the soil is then leached with aqueous solutions of substances (for example sodium hydroxide, sodium acetate or ammonium acetate, sodium tartrate or ammonium tartrate, sodium citrate or ammonium citrate, iron acetate or iron sulphate) able to dissolve the metal oxides and other toxic inorganic substances; these solutions do not dissolve and do not react with the typical components found in soils, such as silicates and carbonates.

The ions of the heavy metals dissolved in the leaching solution are converted into insoluble compounds such as sulphides, by treatment with suitable reagents such as hydrogen sulphide. The insoluble compounds are separated out by filtration and the leaching solution is recycled.

The soil treatment is carried out in a plant composed essentially of a furnace, a column filled with a heat-resistant porous material, a catalytic bed, a condenser, a leaching tank and a precipitation tank.

The decontamination of the soil can be carried out either in a continuous or in a batchwise manner.

In the continuous process, the soil is introduced into the furnace and heated to 500-700°C.

During the heating up to 100-250°C, all of the water and many hydrocarbons evaporate; the organometallic compounds are either evaporated or decomposed. In the final stage of heating up to 500-700°C, all of the hydrocarbons and organometallic compounds are evaporated or decomposed, and many metal oxides are converted into compounds which are readily soluble in non-acidic leaching solvents, and organic compounds are reduced in a gaseous form.

All the vapours and gases released during the heating are passed through a column filled with a heat-resistant porous material heated at the same final temperature of the furnace, i.e. 500-700°C. The high-temperature-resistant porous material is suitable for increasing the contact time at high temperature, and in this way all of the organometallic compounds evaporated decompose to oxides and hydrocarbons. The gases and vapours leaving the column are diluted and cooled to 250-400°C by addition of air. The mixture with the correct oxygen/hydrocarbons ratio is passed through a suitable catalytic bed able to oxidize the organic compounds into carbon dioxide and water. After the heat treatment, the soil is leached with an aqueous sodium hydroxide solution or an aqueous ammonium or sodium acetate solution.

These solutions dissolve not only the toxic lead monoxide and other metal oxides, but also other toxic inorganic compounds such as lead sulphate. The decontaminated soil is separated out by filtration and suitable substances (for example sodium sulphide) are added to the leaching solution, to form sparingly soluble compounds with the toxic metal ions. These products are separated out by filtration and the leaching solution is recycled into the soil treatment.

The final products of the treatment, which is the subject of this patent, are water, carbon dioxide, decontaminated soil and insoluble compounds, suitable for use in the metallurgical industries.

Another decontaminating way, particulary suitable for lead contaminated soils, both in organic and inorganic and organometallic compounds as TEL or TML, besides light or heavy hydrocarbons or halogenated hydrocarbons and other organic compounds, consists in heatingt the contaminated soil at a temperature lower than 450°C, but so high to totally evaporate halogenated hydrocarbons, light and heavy hydrocarbons and/or to totally evaporate and decompose organic and organometallic lead compounds.

Gases and vapours released during the heating phase are treated as above mentioned. After the heat treatment soil is leached with an acqueous solution of substances able to reduce lead dioxide as hydrogen peroxide in acid medium or iron (II) salts as iron sulphate or iron acetate in acid medium or alkaline metals sulphites as sodium or potassium sulphites.

Final goal of these alternative treatments is the reduction of lead dioxide in a lead (II) salt soluble in the same solution used for the leaching of the soils treated at the higher temperatures in order to reduce lead dioxide to lead oxide.

After the lead dioxide reduction treatment, the soil is treated with the same above-mentioned leaching process.

### EXAMPLE 1

One kilogram of contaminated soil containing the following compounds:

| | | |
|---|---|---|
| water | 350 | gr/kg |
| tetraethyllead | 496 | mg/kg |
| triethylead | 543 | mg/kg |
| diethyllead | 49 | mg/kg |
| lead oxide (II) | 155 | mg/kg |
| lead oxide (IV) | 14.757 | mg/kg |
| diethylmercury | 3.8 | mg/kg |
| dimethylmercury | 0.2 | mg/kg |
| mercury oxide | 466 | mg/kg |
| hydrocarbons, C4-C8 | 2.875 | mg/kg |
| hydrocarbons, C5-C20 | 26.642 | mg/kg |
| hydrocarbons >C20 | 7.663 | mg/kg |
| halogenated hydrocarbons | 1.785 | mg/kg |

was loaded into an externally heated furnace. The temperature was increased from 25 to 650°C over 30 minutes and kept at this level for a further 30 minutes. During the treatment, the soil was mixed slowly and a low stream of air was passed into the furnace to facilitate stripping of the vapours. All of the vapours and gases released during the heat treatment were passed through a column with a diameter of 80 mm and a length of 325 mm, filled with porous ceramic bricks and heated to 650°C, the same final temperature as the furnace. The gases and vapours leaving the column are diluted and cooled to 350°C by addition of air. The mixture diluted with air was passed through a suitable catalytic bed in order to oxidize the organic compounds in the gaseous phase into carbon dioxide and water.

The gases leaving the catalytic bed were cooled and the water, containing a small amount of halogenidric acid, was recovered and neutralized by adding sodium hydroxide; this water was used for washing the soil after the leaching treatment.

After the heat treatment, the hot soil was mixed with an alkaline solution containing 5% by weight of sodium hydroxide, giving a slurry. The steam produced was cooled and the water recovered was used to wash the soil after the leaching treatment.

The slurry composed of soil and water was mixed for 30 minutes at a temperature of 85°C and finally filtered. The soil was washed twice with clean water recovered from the condensation, and, thus decontaminated, was returned to the initial area. Both the leaching solution and the washing waters were mixed with a solution containing 10 g/l of sodium sulphide until all of the toxic ions therein were precipitated as sulphides. After separation of the solid phase, the solutions were recycled into the leaching phase of the process. The solid phases, containing metal sulphides, are suitable for recovery of the metals by metallurgical or electrolytic processes.

The analyses of the soil and off-gas exiting, to determine the amounts of organometallic compounds and toxic inorganic compounds, hydrocarbons and halogenated hydrocarbons, were as follows:

| Soil analysis | | |
|---|---|---|
| tetraethyllead | <0.01 | mg/kg |
| triethylead | <0.01 | mg/kg |
| diethyllead | <0.01 | mg/kg |
| lead oxide (II) | <20 | mg/kg |
| lead oxide (IV) | <1 | mg/kg |
| diethylmercury | <0.01 | mg/kg |
| dimethylmercury | <0.01 | mg/kg |
| mercury oxide | <0.1 | mg/kg |
| hydrocarbons, C4-C8 | 0.00 | mg/kg |
| hydrocarbons, C5-C20 | 6 | mg/kg |
| hydrocarbons >C20 | 8 | mg/kg |
| halogenated hydrocarbons | <0.01 | mg/kg |

| gas analysis | | |
|---|---|---|
| organometallic compounds | <0.01 | mg/m³ |
| hydrocarbons | <1 | mg/m³ |
| HCI + HBr | <0.001 | mg/m³ |

### EXAMPLE 2

The same amount of the same soil was used, but the operating conditions were as follows:
The temperature of the furnace was increased from 25 to 500°C over 30 minutes and kept at this temperature for 45 minutes.
The gases and vapours exiting were cooled to 400°C.
The leaching conditions were: 40 minutes at 80°C.
The leaching solution was: 120 g/l sodium acetate with acetic acid added to pH 5.5.

| Analysis of the soil after the treatment | | |
|---|---|---|
| tetraethyllead | <0.01 | mg/kg |
| triethylead | <0.01 | mg/kg |
| diethyllead | <0.01 | mg/kg |
| lead oxide (II) | <10 | mg/kg |
| lead oxide (IV) | <0.04 | mg/kg |
| diethylmercury | <0.01 | mg/kg |
| dimethylmercury | <0.01 | mg/kg |
| mercury oxide | <0.08 | mg/kg |
| hydrocarbons, C4-C8 | 0.00 | mg/kg |
| hydrocarbons, C5-C20 | 4 | mg/kg |
| hydrocarbons >C20 | 6 | mg/kg |
| halogenated hydrocarbons | <0.05 | mg/kg |

### EXAMPLE 3

Here, the sample was one kilogram of contaminated soil containing the following compounds:

| | | |
|---|---|---|
| water | 250 | gr/kg |
| lead oxide (II) | 155 | mg/kg |
| lead oxide (IV) | 14.757 | mg/kg |
| lead sulphate | 35.567 | mg/kg |
| hydrocarbons, C4-C8 | 2.875 | mg/kg |
| hydrocarbons, C5-C20 | 24.642 | mg/kg |
| hydrocarbons >C20 | 7.663 | mg/kg |
| halogenated hydrocarbons | 1.876 | mg/kg |

These substances were removed from the soil under the following conditions:
The temperature of the furnace was increased from 25°C to 550°C over 30 minutes and kept at this temperature for a further 55 minutes.
The exiting gases and vapours were cooled to 450°C.
The leaching conditions were: 40 minutes at 85°C.
The leaching solution was: 150 g/l ammonium acetate with acetic acid added up to pH 5.5.

| Soil analysis after treatment | | |
|---|---|---|
| lead oxide (II) | 12 | mg/kg |
| lead oxide (IV) | 0.4 | mg/kg |
| lead sulphate | 25 | mg/kg |
| hydrocarbons, C4-C8 | 0.00 | mg/kg |
| hydrocarbons, C5-C20 | 8 | mg/kg |
| hydrocarbons >C20 | 14 | mg/kg |
| halogenated hydrocarbons | <0.05 | mg/kg |

### EXAMPLE 4

The same amount of the same soil of example 1 was treated under the following conditions : temperature of furnace was increased from 25°C to 400°C over 30 minutes and kept of this temperature for 15 minutes.

Gas and vapours exiting were passed through a column filled with porous ceramic bricks heated at 400°C and through a suitable catalytic bed at a temperature of 400-425°C.

After the heat treatment, the hot soil was mixed with water, giving a slurry. Vapour produced was cooled and the water recovered was used to wash the soil after the leaching treatment.

The slurry composed by soil and water kept at a temperature of 85°C has been treated with acetic acid under stirring conditions until pH reached a value of 4,5-5. At this moment the slurry was mixed with 15 ml of hydrogen peroxide at 35 % (wt/wt) reducing all lead dioxide to lead (II).

After this operation the slurry was added with an acqueous solution of NaOH at 10 % until pH reached a value of 13,5-14 and the process follow as in the first example.

Gases and soil analysis have similar results of the previous examples.

### EXAMPLE 5

The same material of example 4 has been treated in the same way but the reducing solution was 180 ml (wt/wt) of an acqueous solution of iron (II) sulphate at 20 % at pH 4.

The final leaching solution and the operating condition were the same of example 4.

Similar results of previous example were obtained.

### EXAMPLE 6

The same material of example 4 has been treated under the following conditions :

Direct heating in a furnace by means of hot gases
Temperature of 400°C as long as 20 minutes.

Reducing solution made of 160 ml of an acqueous solution of sodium sulphite of 10 % (wt/wt).

The final leaching solution and the operating conditions were the same of example 2.

Similar results of previous example were obtained.

## Claims

1. Method for soil decontamination by removing halogenated hydrocarbons, light and heavy hydrocarbons, organic and inorganic compounds of lead and of other heavy metals, characterized in that it comprises the following steps:
• treating all of the soil with heat in order to decompose all of the organometallic and inorganic compounds of lead and other heavy metals into hydrocarbons and oxides,
• converting the oxides and other inorganic compounds into new compounds which are readily soluble in leaching solutions, by means of sufficently high temperatures and suitable substances,
• converting the halogenated hydrocarbons and light and heavy hydrocarbons into gaseous form and passing them through a heat-resistant porous material,
• destroying the hydrocarbons and halogenated hydrocarbons present in the gaseous phase by means of catalytic oxidation,
• mixing the heat-treated soil with an aqueous solution of substances able to dissolve the metal oxides and other toxic inorganic substances,
• separating the soil from the leaching solution,
• washing the soil with water,
• precepitation of the toxic ions,
• recycling the leaching solution.

2. Method according to Claim 1, in which the heat treatment of the soil comprises two steps, in which the first one is heating from room temperature to a processing temperature, and the second one at a constant temperature equal to the processing temperature.

3. Method according to Claim 2, in which the said first heating step goes from room temperature up to a temperature of between 500 and 700°C, with a heating time of between 20 and 45 minutes, and the said second heating step is carried out at a constant temperature of between 500 and 700°C with a residence time of between 10 and 60 minutes.

4. Method according to Claim 2 in which the said first heating step goes from room temperature up to a lower temperature of between 300 and 450°C, with a heating time of between 20 and 45 minutes, and the said second heating step is carried out at a constant lower temperature of between 300 and 450°C with a residence time of between 10 and 60 minutes.

5. Method according to Claim 4 in which the reduction of lead dioxide is obtained by means of a solution of suitable substances chosen from the group comprising : hydrogen peroxide, ferrous acetate, ferrous sulphate, and sulphites of alkaline metals.

6. Method according to Claim 3, in which the said heating step is preferably carried out between room temperature and a temperature of between 500 and 700°C with a heating time of between 20 and 45 minutes, preferably, and the second step is carried out at a constant temperature preferably of between 500 and 700°C with a residence time of between 20 and 45 minutes.

7. Method according to one of Claims 1 to 6, in which all of the light and heavy halogenated hydrocarbons and the organometallic compounds, evaporated during the heat treatment, are passed through a column filled with a heat-resistant porous material, heated to a suitable temperature, in order to increase the contact time at high temperature and to decompose the organometallic compounds to metal oxides and hydrocarbons.

8. Method according to one of Claims 1 to 7, in which all of the gases and vapours leaving the column are diluted with air down to 250-450°C.

9. Method according to one of Claims 1 to 8, in which all of the gases and vapours leaving the column, are passed through a catalytic bed which is suitable for oxidizing the organic compounds into carbon dioxide, water and halogenidric acids.

10. Method according to one of claims 1 to 9, in which, after the heat treatment or after the lower heat treatment and the reducing treatment of lead dioxide, the soil is leached with an aqueous solution able to dissolve lead, antimony, arsenic, mercury and tin oxides and the other toxic compounds of these elements.

11. Method according to one of Claims 1 to 10, in which, after the heat treatment or after the lower heat treatment and the reducing treatment of lead dioxide, the soil is leached with a solution chosen from the group comprising: sodium hydroxide or potassium hydroxide solutions or sodium acetate or ammonium acetate solutions adjusted to pH 4.5-5.5 by addition of acetic acid; sodium tartrate or ammonium tartrate solutions adjusted to pH 4.5-5.5 by addition of tartaric acid, sodium citrate or ammonium citrate solutions adjusted to pH 5-5.5 by addition of citric acid.

12. Method according to Claim 1 to 11, in which substances are added to the leaching solution to form insoluble compounds with the ions of the toxic metals.

13. Method according to Claim 12, in which the said substances which form insoluble compounds are chosen from the group composed of sodium sulphide, ammonium sulphide and hydrogen sulphide.

14. Method according to all of previous Claims , in which these insoluble compounds are separated out by filtration or by other liquid-solid separation methods and the leaching solution is recycled into the soil treatment.
